# EUROPEAN PATENT SPECIFICATION

(11) **EP 0 956 232 B1**
(45) Date of publication and mention of the grant of the patent: **07.11.2001**
(21) Application number: 98902312.2
(22) Date of filing: 30.01.1998
(51) Int. Cl.: B62D 27/06, F16B 5/06

(54) **CLAMPING DEVICE FOR CONNECTING PLASTIC AND METAL ELEMENTS**
KLEMMEINRICHTUNG ZUM VERBINDEN VON PLASTIK-UND METALLELEMENTEN
FIXATION PERMETTANT D'ASSEMBLER DES ELEMENTS DE PLASTIQUE ET DE METAL

(30) Priority: 31.01.1997 NO 970416
(43) Date of publication of application: 17.11.1999
(73) Proprietor: Pivco Industries AS, 0975 Oslo (NO)
(72) Inventor: BROWN, David, N-1266 Oslo (NO)
(74) Representative: Johnson, Terence Leslie
(86) International application number: NO9800034
(87) International publication number: WO9833697

(56) References cited:
- EP-A- 0 452 615
- WO-A-93/19342
- CH-A- 381 022
- DE-A- 2 613 193
- NO-B- 156 583

## Description

The invention concerns a clamping device for attaching a plastic panel or plate to a metallic frame or a profile, especially for use in cabins and vehicles.

The combination of plastic and metallic structures, such as profiles has been applied widely within many fields. The different properties of the materials create the need to design the technical connection of the two materials in various ways, since account must be taken of the material's specific properties. Attaching plastic to metallic profiles is a special problem area, particularly where modern thermoplastics are employed. The materials are often unsuitable for welding, gluing and screwing or riveting together. The plastic is relatively weak at point loads. In addition, the rest of the materials' properties are different with regard to heat/cold expansions, thus having a substantial influence on the design solution.

When building cabins where there is a wish to combine a metallic framework, preferably made of extruded metal profiles, with panels or body sections made of modern thermoplastics, one is faced with considerable challenges with regard to the design round the connecting areas of the metal profiles to the plastic panels. In the case of designs of this kind it is natural to let the extruded profiles form openings in the cabin, such as doors, the ends of windows, etc., thus obtaining a design which can be employed for hinging, screwing on of windows, gluing on of windows, sealing strips etc. The plastic panels or body parts can form three-dimensional basic elements which are then attached to and incorporated with the metal profiles.

From WO93/19342 is known a cage for the ballistic protection of persons or objects with panels forming the cage walls, these being connected by profiled rails. The panels of the cage are compressible, at least in the regions which engage the rails and by the fact that the rails have at least one groove, in which a panel edge can engage, the edge region of the panel being compressed in order to fit. The compression is achieved be means of wedges inserted between the groove wail of the rail and the panel surface of the edge region. This construction is based on the fact that the plate elements are compressible and can be firmly connected to the rails by means of non-compressible wedge elements.

Further it is from EP-A-0452615 known to provide a clamping connection between a profile element and a plate element by use of a clamping strip. The profile element has a groove or pocket with a conical form in which the clamping strip and an end portion of the plate element are to be inserted. The plate element is bent around the corner of the profile element at the top of the conical groove. The clamping strip is provided with a foot element with a conical shape in order to be positioned into the groove and exerts a clamping force against the end portion of the plate element. The clamping strip is held in the groove by means of a nose which in correct position is placed under a projection at the wall of the groove. In this position the head part of the clamping strip will provide a closure of the groove of the profile element and one part of this end portion will be positioned against the plate element and hold it down against the profile element so that it cannot escape. With this construction only a panel element with a bent end portion can be attached to the profile element and only panels with a breeder pre-determined thickness can be clamped.

The object of the present invention is to provide a clamping device which is especially well-suited for use in building such cabins with a combination of plastic plates or panels and metallic framework.

This object is achieved with a clamping device which is characterized by that which is presented in the patent claims.

The invention will now be explained in more detail by means of embodiments which are presented in the drawings, in which:
figure 1 is a first embodiment of the invention, viewed in a purely schematic section, with the inclusion of detail drawings for alternative attaching cord designs,
figure 2 is a variant of fig. 1, with a securing device,
figure 3 is a variant of the design in fig. 2,
figure 4 is a further embodiment with a locking device, and
figure 5 is a variant of fig. 4.

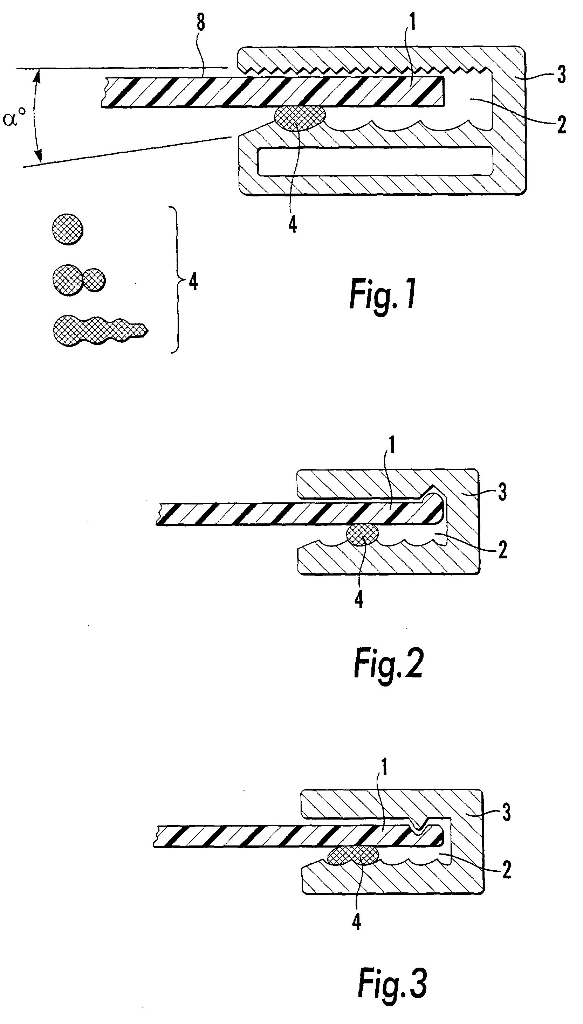

The drawings illustrate various alternative embodiments of the clamping device according to the invention in purely schematic form. Fig. 1 hereby illustrates the principal design of the device according to the invention, where the end area of a plastic plate or a plastic panel which may form a body part, has to be passed into a pocket 2 in a metallic profile 3 on a vehicle cabin. The end of the plastic panel 1 is so adapted that it slides into the pocket 2 which will enclose the plastic panel's end edges, thereby forming an attaching area. In order to give the plastic a mechanical connection to the metal profile in these areas, it is designed in a special fashion. Here the edge or end of the plastic panel 1 is inserted in the pocket 2 on the profile. In the illustrated embodiment, the profile is designed with sharp grooves on one side and a more wave-shaped form on the other side, and possibly designed with a slight angle or conical shape in the opening area. After the end of the plastic profile 1 has been inserted in this groove, there is pushed into the pocket or the groove on the inside of the plastic part a partially elastic cord 4, which will cause the plastic panel to be pushed up towards the corrugated plane in the pocket 2, thereby causing the cord 4 to be firmly clamped and pushed down into the grooved/curved shapes in the edge of the pocket. Since the wire 4 is elastically designed with an elasticity which may be firmer and more resilient than the plastic material, the plastic material will creep slightly up in the corrugated surface, providing a physical bond between the metal and the plastic material in the shear direction.

Alternatively, the end of the plastic profile is designed with an upwardly-directed groove or bead on its outer edge, as illustrated in fig. 2. This bead is pushed up in a groove formed in the inner area of the pocket 2 of the metal profile, thereby ensuring that the panel is unable to slide out of the pocket.

With such a design it is not necessary to have a sharp-edged grooving of the end lateral surface of the pocket.

An alternative to this design is illustrated in fig. 3 which presents a "reverse" design to that in fig. 2, the bead being provided in the wall of the pocket, while the end of the plastic panel has a groove.

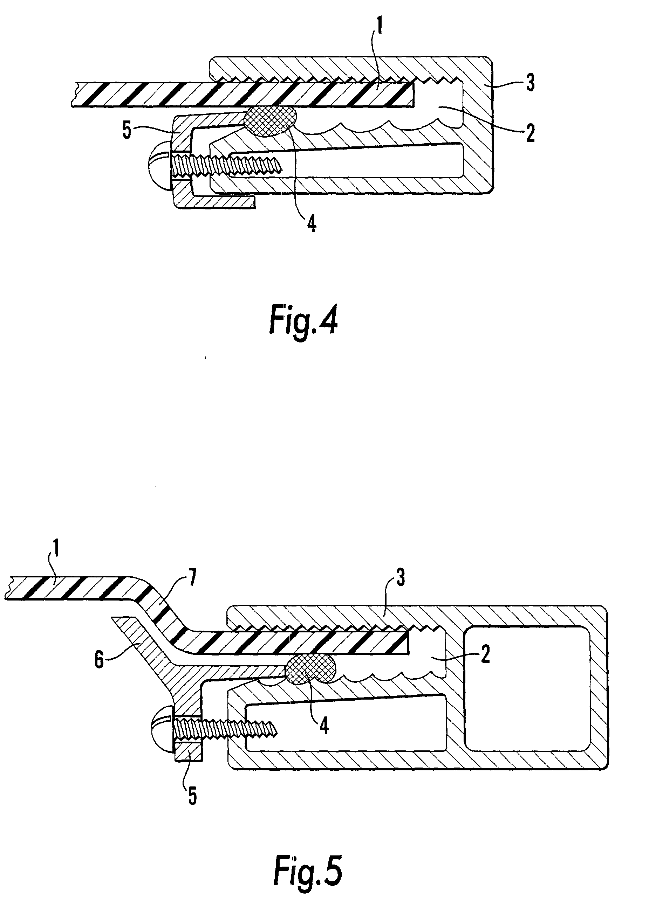

In order to ensure that the elastic cord 4 does not loosen or fall out during use over a period of time, when the elasticity in the cord 4 may be reduced and its resilience deteriorate, a locking profile 5 can be employed as illustrated in fig. 4. This locking profile 5 can also be made with an upwardly-directed edge 6 which can cover a profiled end part 7 of the plastic panel 1, which end part 7 is inserted in the pocket 2, as illustrated in fig. 5. By this means it will be possible to ensure that the plastic panel 1 cannot slide out of the pocket 2. thereby losing its position and the connection with the metal profile 3.

The locking cord 4 can be made by extrusion with a circular section, figure of eight section or wedge-shaped with a curved/wavy surface, which latches on to the grooves/curves in the profile pocket. These alternatives are illustrated as detail section drawings in fig. 1. The locking cord may also have a twisted structure.

A special feature of the invention is based on the fact that the plastic's outside 8 is used at all times as reference surface against the metallic profile 3, thereby ensuring that a controlled level is obtained for the outsides of the plastic panel and the profile element. This can be a problem particularly where the plastic panels/body parts are of unequal thickness. In the present invention this is carried out by the cord which is pushed into the slightly conically shaped pocket being locked in such a manner that it pushes the plastic edge's outer side against the top of the metal profile independently of the plastic panel's thickness and unevenness. The present invention also contributes to a point-free attaching device which provides good distribution of the clamping forces and offers the possibility for thermal expansion and movement of the materials in relation to each other without major strains and destruction of the panels.

By using a continuous cord an uninterrupted clamping can be obtained along the entire length of the profile pocket into which the end portion of the plastic panel is inserted. Uneven thickness of the plastic panel's end section in this direction will be absorbed by the cord and the cord will also act as a sealing strip.

## Claims

1. A clamping device for attaching plastic panels (1) to metallic frames/profiles (3), especially for use in cabins of vehicles, in which frames/profiles there is provided a pocket (2) for insertion of an end portion of the plastic panel (1), whereby at least one side surface of the pocket (2) is wave shaped/corrugated,
**characterized in that** the plastic panel's (1) end portion is locked in the pocket (2) by a cord (4) of a material which has more elasticity than the profile (3) and the panel (1), said cord (4) having a width shorter than the depth of the pocket (2), and being pressed into the space between the panel (1) and the corrugated side surface, and that the side surface of the profile (3), facing the panel surface opposite the cord (4) is provided with means for establishing a fixing force to the panel.

2. A device according to claim 1,
**characterized in that** the pocket (2) in the metallic profile (3) has approximately sharp ribs on the side which faces the plastic panel's outside, opposite to the cord (4),

3. A device according to one of the claims 1-2.
**characterized in that** the cord is elastic in the transverse direction.

4. A device according to one of the claims 1-3,
**characterized in that** a projecting edge or bead in the profile pocket engages with the plastic panel's outside or a notch in the outside, or that the plastic plate's outside is designed with a bead which engages with a groove in the profile pocket's lateral surface (fig. 2, 3)

5. A device according to one of the claims 1-4,
**characterized in that** the cord (4) is locked/secured by a profile (5) which pushes it into the pocket (2) and which is attached to the metal profile (3)

6. A device according to one of the claims 1-5,
**characterized in that** the profile (5) for locking and securing the cord (4) has an outwardly-directed profile part (6), which is locked against the plastic panel's (1) rear edge by the lowered arrangement of the plastic panel (1) in connection with the attachment against the main profile.

## Patentansprüche

1. Klemmvorrichtung zur Befestigung von Kunststoffplatten (1) an metallischen Rahmen/Profilen (3), insbesondere zur Verwendung in Fahrzeugführerhäusern, wobei in den Rahmen/Profilen eine Tasche (2) zur Einführung eines Endteils der Kunststoffplatte (1) vorgesehen und mindestens eine Seite der Tasche (2) wellenförmig/geriffelt ist,
**dadurch gekennzeichnet, daß** der Endteil der Kunststoffplatte (1) in der Tasche (2) durch eine Schnur (4) verriegelt wird, die aus einem Material mit einer größeren Elastizität als die des Profils (3) und der Platte (1) besteht, wobei die Breite der Schnur (4) geringer ist als die Tiefe der Tasche (2) und die Schnur in den Raum zwischen der Platte (1) und der geriffelten Seitenfläche gedrückt wird, und daß die der Plattenfläche gegenüber der Schnur (4) zugewandte Seitenfläche des Profils (3) mit Mitteln zur Herstellung einer Befestigungskraft an der Platte versehen ist.

2. Vorrichtung nach Anspruch 1,
**dadurch gekennzeichnet, daß** die Tasche (2) in dem Metallprofil (3) auf der der Außenseite der Kunststoffplatte gegenüber der Schnur (4) zugewandten Seite nahezu scharfe Rippen aufweist.

3. Vorrichtung nach Anspruch 1 oder 2,
**dadurch gekennzeichnet, daß** die Schnur in Querrichtung elastisch ist.

4. Vorrichtung nach einem der Ansprüche 1 - 3,
**dadurch gekennzeichnet, daß** ein vorragendes Ende oder Wulst in der Profiltasche die Außenseite der Kunststoffplatte oder eine Kerbe in der Außenseite in Eingriff nimmt oder daß die Außenseite der Kunststoffplatte mit einem Wulst ausgeführt ist, der in eine Nut in der lateralen Fläche der Profiltasche eingreift (Fig. 2,3).

5. Vorrichtung nach einem der Ansprüche 1 - 4,
**dadurch gekennzeichnet, daß** die Schnur (4) durch ein Profil (5) verriegelt/befestigt wird, das sie in die Tasche (2) schiebt und das an dem Metallprofil (3) angebracht ist.

6. Vorrichtung nach einem der Ansprüche 1 - 5,
**dadurch gekennzeichnet, daß** das Profil (5) zur Verriegelung und Befestigung der Schnur (4) einen nach außen gerichteten Profilteil (6) aufweist, der durch die abgesenkte Anordnung der Kunststoffplatte (1) in Verbindung mit der Befestigung am Hauptprofil mit der Hinterkante der Kunststoffplatte (1) verriegelt ist.

## Revendications

1. Dispositif de serrage pour attacher des panneaux en plastique (1) à des cadres/profilés métalliques (3), destiné à être utilisé, en particulier, dans des cabines de véhicules, lesquels cadres/profilés sont pourvus d'une poche (2) destinée à recevoir une portion d'extrémité du panneau en plastique (1), au moins une surface latérale de la poche (2) étant, à cet effet, en forme de vague/ondulée,
**caractérisé en ce que** la portion d'extrémité du panneau en plastique (1) est verrouillée dans la poche (2) par un cordon (4) constitué d'une matière présentant davantage d'élasticité que le profilé (3) et le panneau (1), ledit cordon (4) présentant une largeur plus courte que la profondeur de la poche (2), et étant comprimé dans l'espace entre le panneau (1) et la surface latérale ondulée, et **en ce que** la surface latérale du profilé (3) tournée vers la surface du panneau opposée au cordon (4) est pourvue de moyens permettant d'établir une force de fixation sur le panneau.

2. Dispositif selon la revendication 1,
**caractérisé en ce que** la poche (2) dans le profilé métallique (3) présente des nervures relativement affilées sur le côté tourné vers l'extérieur du panneau en plastique, à l'opposé du cordon (4).

3. Dispositif selon l'une des revendications 1-2,
**caractérisé en ce que** le cordon est élastique dans la direction transversale.

4. Dispositif selon l'une des revendications 1-3,
**caractérisé en ce qu'**une arête ou perle saillante dans la poche du profilé engage l'extérieur ou une entaille dans l'extérieur du panneau en plastique, ou **en ce que** l'extérieur du panneau en plastique est conçu avec une perle qui engage une rainure dans la surface latérale de la poche du profilé (figures 2, 3).

5. Dispositif selon l'une quelconque des revendications 1-4,
**caractérisé en ce que** le cordon (4) est verrouillé/assujetti par un profilé (5) qui le pousse dans la poche (2) et qui est attaché au profilé métallique (3).

6. Dispositif selon l'une quelconque des revendications 1-5,
**caractérisé en ce que** le profilé (5) destiné à verrouiller et à assujettir le cordon (4) présente une partie de profilé (6) orientée vers l'extérieur, laquelle est verrouillée contre le bord arrière du panneau en plastique (1) par l'agencement abaissé du panneau en plastique (1) en relation avec l'attache contre le profilé principal.
